# FASCICULE DE BREVET EUROPEEN

(11) **EP 3 332 352 B1**
(45) Date de publication et mention de la délivrance du brevet: **04.09.2019**
(21) Numéro de dépôt: 16744811.7
(22) Date de dépôt: 08.07.2016
(51) Int. Cl.: G06K 9/00, G08G 1/14

(54) **DISPOSITIF ET PROCEDE DE DETECTION DE PLACE DE STATIONNEMENT LIBRE POUR UN VEHICULE AUTOMOBILE**
VORRICHTUNG UND VERFAHREN ZUR ERFASSUNG EINER FÜR EIN KRAFTFAHRZEUG ZUR VERFÜGUNG STEHENDEN PARKLÜCKE
DEVICE AND METHOD FOR DETECTING A PARKING SPACE THAT IS AVAILABLE FOR A MOTOR VEHICLE

(30) Priorité: 03.08.2015 FR 1557491
(43) Date de publication de la demande: 13.06.2018
(73) Titulaire: RENAULT s.a.s., 92100 Boulogne-Billancourt (FR)
(72) Inventeur: CHIRCA, Mihai, 75015 Paris (FR)
(86) Numéro de dépôt international: PCT/FR2016/051754
(87) Numéro de publication internationale: WO 2017/021601

(56) Documents cités:
- EP-A1- 1 701 323
- VEERAPATHIRAPILLAI VINOHARAN ET AL: "A wheel-based side-view car detection using snake algorithm", INFORMATION AND AUTOMATION FOR SUSTAINABILITY (ICIAFS), 2012 IEEE 6TH INTERNATIONAL CONFERENCE ON, IEEE, 27 septembre 2012 (2012-09-27), pages 185-189, XP032315973, DOI: 10.1109/ICIAFS.2012.6419902 ISBN: 978-1-4673-1976-8
- FENG TAN ET AL: "Shape Template Based Side-View Car Detection Algorithm", INTELLIGENT SYSTEMS AND APPLICATIONS (ISA), 2011 3RD INTERNATIONAL WORKSHOP ON, IEEE, 28 mai 2011 (2011-05-28), pages 1-4, XP031947356, DOI: 10.1109/ISA.2011.5873380 ISBN: 978-1-4244-9855-0

## Description

L'invention concerne un dispositif et un procédé de détection de place de stationnement libre pour un véhicule automobile.

Il existe principalement deux techniques de détection de places de stationnement libres, une première technique basée sur l'utilisation de capteurs dits extéroceptifs et une seconde technique basée sur l'utilisation de capteurs dits proprioceptifs.

Parmi les méthodes mettant en oeuvre la première technique, il est connu, par exemple du document de brevet US20140266803, l'utilisation d'une caméra vidéo située au voisinage d'une zone de stationnement pour déterminer les places libres ou occupées dans la zone de stationnement. D'autres méthodes basées sur l'utilisation de capteurs extéroceptifs proposent d'utiliser des capteurs à ultrasons ou bien des capteurs magnétiques, installés au voisinage d'une place de stationnement, de manière à détecter si la place de stationnement surveillée par le capteur est libre ou non. Cependant, pour être utilisée, l'information détectée doit pouvoir être communiquée aux automobilistes, ce qui implique soit de mettre en oeuvre une communication avec un système externe, par exemple par voie radio, permettant de communiquer aux automobilistes les données de disponibilités des places surveillées, par exemple via une application mobile et une carte géographique, soit de déployer un système de signalisation visible à distance, par exemple sous la forme de panneaux lumineux aptes à indiquer le statut libre ou occupé de la place de stationnement surveillée. Un autre inconvénient des méthodes utilisant des capteurs extéroceptifs est lié aux coûts élevés d'installation et de maintenance des capteurs utilisés. En outre, la maintenance ou le remplacement d'un tel capteur peut rendre indisponible la place de stationnement pendant la durée de l'opération de maintenance.

Parmi les méthodes basées sur l'utilisation de capteurs dits proprioceptifs, il est connu par exemple du document de brevet US20140347196, un système embarqué sur un véhicule destiné à reconnaître automatiquement si une place de stationnement va potentiellement devenir libre. Le système embarqué comprend pour ce faire un capteur fournissant un signal utilisé pour évaluer une probabilité qu'un véhicule stationné sur une place de stationnement va bientôt quitter cette place. Le capteur embarqué peut être notamment une caméra, un microphone ou un capteur à ultrason ou encore une combinaison de ces différents capteurs. Cependant, cette méthode est orientée vers la détection d'éléments susceptibles d'indiquer qu'un véhicule va quitter une place de stationnement de manière imminente et non sur la détection d'une place de stationnement déjà libre. Un autre document dans l'état antérieur est le EP 1 701 323 A1.

Aussi, il existe un besoin pour un dispositif et un procédé de détection de places de stationnement libres qui ne présentent pas les inconvénients précités.

A cet effet, l'invention concerne un procédé de détection d'une place de stationnement libre à partir d'un véhicule automobile circulant sur une chaussée, ledit véhicule automobile étant équipé d'un appareil de prise d'image d'une scène de chaussée et de son environnement immédiat, ledit procédé étant caractérisé en ce qu'il comprend une phase d'apprentissage au cours de laquelle des caractéristiques, parmi lesquelles au moins les dimensions, relatives à des objets connus susceptibles d'être présents dans la scène sont stockées localement dans une base de données au niveau dudit véhicule, et ledit procédé comprenant :
- une étape d'acquisition, à partir dudit appareil de prise d'image, d'une ou plusieurs images de scène de la chaussée et de son environnement immédiat,
- une étape de traitement d'image, réalisée par un organe de traitement embarqué dans ledit véhicule, dans laquelle :
   on détecte dans l'image de la scène acquise au moins un objet connu dont les caractéristiques ont été préalablement apprises et stockées localement dans la base de données,
   on détecte dans l'image de la scène acquise la présence d'au moins une zone de stationnement comprenant au moins une place de stationnement libre et on estime les longueurs respectives des places de stationnement libres, à partir d'une corrélation entre les caractéristiques extraites de la base de données relatives aux objets connus détectés dans l'image.

L'invention permet ainsi de fournir un outil de détection de place de stationnement libre, qui peut être directement embarqué sur le véhicule et qui ne nécessite aucune communication avec un système externe au véhicule. En outre, grâce au processus d'apprentissage, qui permet d'enregistrer en amont au niveau véhicule, un inventaire d'objets connus susceptibles d'être perçus par le conducteur du véhicule dans son environnement de roulage, ainsi que leurs caractéristiques, en particulier en termes de dimension, il est possible, par un traitement d'image approprié mis en oeuvre par un organe de traitement au niveau véhicule, de détecter ces objets connus dans l'image de la scène acquise et ainsi de corréler leurs dimensions afin d'estimer des longueurs relatives de places de stationnement potentiellement libres détectées dans l'image acquise.

Avantageusement, les objets connus préalablement appris et stockés comprennent des objets susceptibles d'être présents dans la scène parmi lesquels au moins des panneaux de signalisation, des marquages sur la chaussée, des véhicules, des roues des véhicule.

Selon un mode de réalisation, l'étape de traitement d'image réalise une étape de détection dans l'image de la scène acquise, d'une portion de chaussée sensiblement plane et sans obstacle située sur un côté ou l'autre de la chaussée et bornée par des objets connus détectés, de manière à déterminer les places de stationnement libres et une étape de comparaison des dimensions respectives des objets connus détectés bornant ladite portion de chaussée relativement à ladite portion de chaussée afin d'estimer la longueur relative de ladite portion de chaussée.

Avantageusement, les objets connus bornant ladite portion de chaussée détectée sont des véhicules stationnés de part et d'autre de ladite portion de chaussée détectée.

De préférence, la détermination des dimensions respectives des véhicules stationnés de part et d'autre de ladite portion de chaussée comprend la détection des points de contact des roues avant et arrière des véhicules avec la chaussée, la détection de l'appartenance des roues au même véhicule et la détection d'un type de véhicule correspondant à partir d'une classification préalablement stockée au niveau du véhicule associant pour chaque type de véhicule une distance moyenne entre les roues avant et arrière du véhicule, l'indication du type de véhicule par ladite classification fournissant en outre la longueur correspondante associée au type de véhicule.

Avantageusement, le procédé comprend en outre une étape de comparaison, par l'organe de traitement embarqué, entre d'une part, au moins une desdites longueurs respectives estimées et, d'autre part, une information représentative d'une longueur dudit véhicule, de façon à fournir une indication au conducteur dudit véhicule que la place de stationnement détectée est suffisamment longue pour permettre le stationnement dudit véhicule.

Selon un mode de réalisation, la détection des zones de stationnement comprend l'identification d'un marquage sur la chaussée de type ligne blanche discontinue disposée sur un côté ou l'autre de la chaussée et la détection d'au moins un véhicule stationné au-delà de ladite ligne blanche discontinue.

L'invention concerne également un dispositif de de détection d'une place de stationnement libre comprenant un appareil de prise d'image embarqué sur un véhicule automobile circulant sur une chaussée, ledit appareil de prise d'image étant apte à acquérir des images d'une scène de chaussée et de son environnement immédiat, une mémoire embarquée sur ledit véhicule, pour stocker une base de données d'informations correspondant à un inventaire d'objets connus susceptibles d'être présents dans la scène, ladite base de données stockant des caractéristiques, parmi lesquelles au moins les dimensions, relatives aux objets connus, et un organe de traitement embarqué sur ledit véhicule apte à effectuer un traitement d'image à partir d'une ou de plusieurs images acquises par l'appareil de prise d'image, ledit traitement d'image étant conçu pour détecter au moins un objet connu dont les caractéristiques ont été préalablement stockées dans la base de données et, à partir d'une corrélation entre les caractéristiques extraites de la base de données relatives aux objets connus détectés dans l'image, pour détecter la présence d'au moins une zone de stationnement comprenant au moins une place de stationnement libre et pour estimer les longueurs respectives des places de stationnement libres.

Avantageusement, l'organe de traitement est apte à effectuer une comparaison entre d'une part, au moins une desdites longueurs respectives estimées et, d'autre part, une information représentative d'une longueur dudit véhicule, de façon à fournir une indication au conducteur dudit véhicule que la place de stationnement détectée est suffisamment longue pour permettre le stationnement dudit véhicule.

L'organe de traitement peut être mis en oeuvre par des moyens numériques de traitement, par exemple un microprocesseur, un microcontrôleur ou autre.

L'invention concerne encore un véhicule automobile caractérisé en ce qu'il comprend un dispositif de détection d'une place de stationnement libre selon l'invention.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la Figure 1 illustre un exemple d'image de scène acquise par la caméra équipant le véhicule en cours de recherche d'une place de stationnement libre ;
- la Figure 2 illustre l'image de la figure 1 après l'application d'un traitement de détection de la chaussée ;
- la Figure 3 illustre une vue de détail de la figure 2 ;

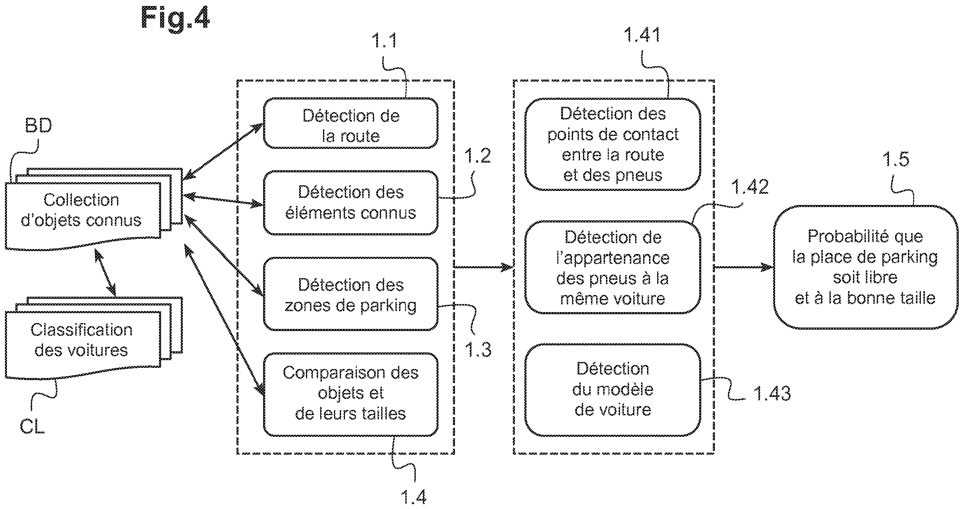

- la Figure 4 est une vue schématique globale du fonctionnement de l'algorithme mis en oeuvre par la présente invention.

Par place de stationnement vacante ou libre ou disponible, on entend une place de stationnement présentant des dimensions minimales requises pour permettre de garer le véhicule, en particulier dans un nombre maximal de manoeuvres précédemment choisies pour garer le véhicule.

La méthode de détection de place de stationnement libre met en oeuvre un appareil de prise d'image embarqué sur le véhicule, typiquement une caméra, associé à un algorithme de traitement d'image, qui sera décrit en détail par la suite, permettant d'obtenir de bonnes performances de détection, sans qu'il soit nécessaire d'utiliser de caméra à haute ou très haute définition.

En effet, le principe de fonctionnement de l'algorithme de traitement d'image est d'emprunter au comportement humain appliqué par un conducteur qui cherche à déterminer si une place de stationnement est libre. Typiquement, le conducteur compare de manière intuitive une place de stationnement potentiellement libre avec des objets de dimension connue, par exemple présents dans son environnement immédiat, de manière à estimer la longueur de cette place de stationnement et ainsi déterminer son caractère libre ou non. Autrement dit, le conducteur ne dispose pas des mesures précises de la place de stationnement potentiellement libre mais, par un processus cognitif d'apprentissage et de comparaison avec des objets connus en termes de dimension, est à même de pouvoir estimer sa longueur relative. Par exemple, une place de stationnement libre disposée entre deux véhicules va être comparée par le conducteur en recherche d'une place à la taille des deux véhicules qui la bornent. De plus, toujours par apprentissage, le conducteur est à même d'appréhender la taille de son véhicule par rapport à celle des véhicules observés. C'est précisément le principe de fonctionnement de l'algorithme de traitement d'image mis en oeuvre qui va être décrit.

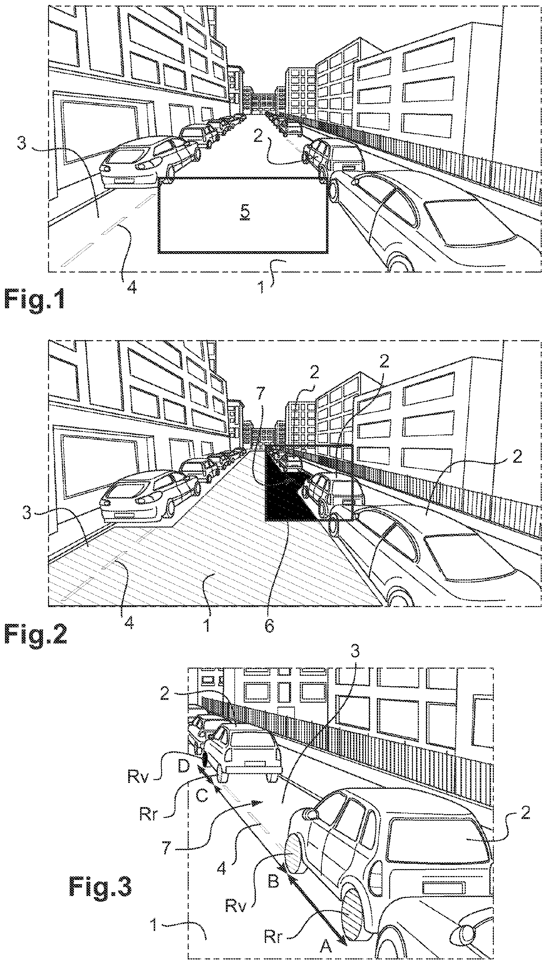

Lors de la recherche d'une place de stationnement libre à partir d'un véhicule automobile circulant sur une chaussée, la caméra équipant le véhicule automobile permet d'acquérir des images d'une scène de la chaussée sur laquelle circule le véhicule et de son environnement immédiat, en particulier d'une scène frontale située à l'avant du véhicule par rapport à sa direction de déplacement, comme illustré par l'exemple de la figure 1. L'image de la scène acquise par la caméra illustrée en figure 1 montre la chaussée 1 sur laquelle circule le véhicule embarquant la caméra, des véhicules 2 en stationnement sur des zones de stationnement 3 situés de chaque côté de la chaussée 1 et délimitées par un marquage au sol 4 constitué d'une ligne blanche discontinue qui s'étend sensiblement dans la direction longitudinale de la chaussée.

Une première étape 1.1 mise en oeuvre par l'algorithme de traitement d'image concerne la détection dans l'image de la scène acquise du motif correspondant à la chaussée proprement dite. Pour ce faire, connaissant les paramètres intrinsèques et extrinsèques de la caméra et en faisant l'hypothèse que la chaussée est plane dans la proximité immédiate du véhicule, on extrait le motif correspondant de la chaussée, symbolisé par le rectangle 5 sur l'image de la figure 1. A noter que les paramètres intrinsèques sont des paramètres internes à la caméra (par exemple la distance focale, les facteurs d'agrandissement de l'image, les coordonnées de la projection du centre optique de la caméra sur le plan image), et les paramètres extrinsèques sont des paramètres qui peuvent varier suivant la position de la caméra dans l'espace de travail (par exemple les composantes du vecteur de translation permettant de passer du repère lié à l'espace de travail au repère lié à la caméra).

Ensuite, par extension, on détecte toute la chaussée visible sur l'image comme illustré par la zone hachurée de la figure 2. On utilise préférentiellement un algorithme de calcul de flux optique pour déterminer que la chaussée précédemment apprise est approximativement plane et qu'elle ne contient pas d'obstacles. Dit autrement, une détection d'obstacles par flux optique est mise en oeuvre à l'intérieur du périmètre de la chaussée détectée dans l'image. L'estimation du flux optique est basée par exemple sur un algorithme SFM (acronyme pour « Structure From Motion » en anglais), qui n'est pas utilisée pour reconstruire toute la structure de la scène mais simplement pour détecter les obstacles à l'intérieur du périmètre de la zone hachurée correspondant à la chaussée détectée.

Une deuxième étape 1.2 mise en oeuvre par l'algorithme de traitement d'image concerne alors la détection d'objets connus dans la scène acquise dont les caractéristiques, en particulier de dimension ou de taille, ont été préalablement apprises et stockées localement dans une base de données d'objets connus BD stockée dans le véhicule automobile. Les objets connus stockés dans la base de données sont des objets susceptibles d'être présents dans la scène. Ces objets comprennent par exemple les panneaux de signalisation, les marquages au sol de la chaussée tels que des lignes continues ou discontinues et des mots peints au sol (par exemple le mot « payant »), les véhicules, les roues des véhicules, les obstacles connus. L'étape de détection des objets connus dans la scène peut être mise en oeuvre par traitement d'images et reconnaissance de formes.

Pour détecter des places de stationnement libres, l'algorithme met en oeuvre une étape intermédiaire 1.3 de détection de zones de stationnement. Dans l'exemple illustré sur les figures 1 et 2, les zones de stationnement 3 sont disposées des deux côtés de la chaussée 1. Aussi, après l'étape de détection des objets connus dans la scène, l'algorithme est à même d'extraire et de corréler les informations liées aux objets connus détectés, relatives à la présence d'une ou plusieurs zones de stationnement dans l'image de la scène acquise. Par exemple, la détection des lignes blanches discontinues 4 de part et d'autre de la chaussée et la détection de véhicules 2 stationnés au-delà de ces lignes blanches, conduit à identifier dans la scène des zones de stationnement 3 situées des deux côtés de la chaussée 1.

Ensuite, une étape 1.4 de corrélation entre les caractéristiques extraites de la base de données relatives aux objets connus détectés dans l'image est mise en oeuvre, qui vise à fournir une indication au conducteur sur la présence de places de stationnement libres et sur leur longueur respective. Plus précisément, cette étape met en oeuvre un processus de comparaison des objets connus détectés et de leur taille. En effet, une fois qu'on détecte dans l'image de la scène acquise un objet connu qui est stocké dans la base de données BD, on peut comparer sa taille à d'autres objets détectés qui sont autour. Ainsi, cette étape comprend en premier lieu la détection d'une place de stationnement, consistant par exemple à détecter une portion de chaussée sensiblement plane et sans obstacle située au niveau des zones de stationnement détectées, et bornée par des objets connus détectés, typiquement des véhicules stationnés. La zone délimitée par le carré 6 sur la figure 2 illustre un tel exemple de détection d'une potentielle place de stationnement 7. En effet, la place de stationnement 7 est détectée d'abord parce qu'on observe une portion de chaussée définissant un espace vide entre deux obstacles. De plus ces deux obstacles sont des véhicules et la dimension de l'espace vide observé est sensiblement comparable à la taille de ces deux véhicules. Ensuite, afin d'estimer la longueur relative de cette portion de chaussée détectée, l'algorithme met en oeuvre une étape de comparaison des dimensions respectives des véhicules détectés bornant cette portion de chaussée.

Or, à cause de l'angle de vue et de la distance par rapport à la caméra, les objets sont plus ou moins facilement détectables. Aussi, pour faciliter la détection de véhicules bornant une potentielle place de stationnement libre et la détermination de leur dimension en longueur, l'algorithme est conçu pour se concentrer sur la détection des formes simples dans l'image de la scène acquise, et en particulier, selon un exemple de réalisation préféré, sur la détection des roues des véhicules et de leur position respective. Pour ce faire, on fait les deux hypothèses suivantes, qui visent à faciliter le traitement informatique correspondant, à savoir que les roues sont en contact avec la chaussée et que l'angle entre les roues et la chaussée est de 90 degrés. En référence à la figure 3, qui illustre une vue agrandie de la zone 6 de la figure 2, on met en oeuvre une étape 1.41 de détection dans l'image des points de contact entre la chaussée et des roues de véhicule détectée. Ainsi, les points A, B, C, D dans l'image correspondent aux points de contact avec la chaussée des roues avant Rv et arrière Rr des véhicules 2 bornant la potentielle place de stationnement libre 7 précédemment détectée. La position absolue de ces points dans l'espace est calculable par trigonométrie, d'où on peut en déduire la distance entre ces points. En particulier, le fait que la route soit plane et que les paramètres intrinsèques et extrinsèques de la camera soient connus, la détermination de la position de ces points de contact revient au calcul d'une homographie. Cependant, ces points de contact sont détectés avec une certaine incertitude en raison notamment de la qualité de la caméra utilisée. Pour réduire cette incertitude, une étape 1.42 de détection de l'appartenance des roues détectées à un même véhicule est mise en oeuvre, ainsi que parallèlement, une étape 1.43 de détection du type ou modèle de véhicule correspondant, préférentiellement à partir d'une classification CL préalablement stockée au niveau du véhicule et associant pour chaque type de véhicule stocké, une distance moyenne entre les roues avant et arrière du véhicule, l'indication du type de véhicule dans la classification fournissant en outre la longueur correspondante associée au type de véhicule. Cette classification permettra ainsi de déterminer la longueur approximative du véhicule, partant de la détermination de la position des points de contact avec la chaussée des roues avant et arrière de ce véhicule, même si cette longueur n'est pas renseignée dans la base de données BD, ou même si le véhicule en question n'est pas détecté avec précision, en étant approximée à un type de véhicule similaire dans la classification. Une précision supplémentaire peut être apportée au dispositif par la connaissance de la distance entre le train avant et l'avant du véhicule, ainsi que la connaissance de la distance entre le train arrière et l'arrière du véhicule. L'algorithme est alors à même d'estimer la longueur de la potentielle place de stationnement libre relativement aux longueurs des véhicules la bornant.

Enfin, dans une étape 1.5, l'algorithme met en oeuvre une étape de comparaison entre d'une part, cette longueur respective estimée et, d'autre part, une information représentative d'une longueur du véhicule en recherche d'une place de stationnement, c'est-à-dire le véhicule embarquant la caméra, de façon à fournir une indication au conducteur que la place de stationnement détectée est suffisamment longue pour permettre le stationnement dudit véhicule.

L'invention propose donc un traitement d'image qui extrait les places de stationnement libres et estime leur longueur respective par un processus d'apprentissage et de comparaison basé sur des objets connus détectés dans l'image dont les caractéristiques notamment en termes de taille ou dimension, sont mémorisées. Les places de stationnement libres ainsi que leurs longueurs estimées sont utilisées de manière à indiquer au conducteur une place de stationnement libre dont la longueur est suffisante pour lui permettre de garer son véhicule. L'information fournie sur la longueur de la place de stationnement libre permettra au conducteur de se garer aisément et sans perte de temps, en n'essayant de se garer que sur des places de stationnement libres adaptées à la longueur de son véhicule.

L'invention est en outre particulièrement avantageuse en ce que le traitement d'image proposé permet ainsi de détecter de plus loin une place de stationnement potentiellement libre, ce qui permet de rouler plus vite dans la phase de recherche d'une place de stationnement, puis de ralentir seulement une fois l'indication fournie qu'une place potentiellement libre et à la bonne longueur a été détectée et d'éventuellement affiner la détermination de la longueur de cette place potentiellement libre à son approche et à faible vitesse, au moyen, par exemple, d'un système de capteurs à ultrasons équipant le véhicule et dédié à cet effet, de façon connue en soi. Aussi, le système de détection de l'invention est un complément utile aux systèmes de détection de places de stationnement basés sur une détection d'obstacles par ultrason, qui, par contraste avec le système de l'invention, ont de bonnes performances uniquement pour de faibles distances (inférieures à 2,5 m) et à faibles vitesses (inférieures à 25 km/h).

## Revendications

1. Procédé de détection d'une place de stationnement libre à partir d'un véhicule automobile circulant sur une chaussée (1), ledit véhicule automobile étant équipé d'un appareil de prise d'image d'une scène de chaussée et de son environnement immédiat, ledit procédé étant **caractérisé en ce qu'**il comprend une phase d'apprentissage au cours de laquelle des caractéristiques, parmi lesquelles au moins les dimensions, relatives à des objets connus susceptibles d'être présents dans la scène sont stockées localement dans une base de données (BD) au niveau dudit véhicule, et ledit procédé comprenant :
- une étape d'acquisition, à partir dudit appareil de prise d'image, d'une ou plusieurs images de scène de la chaussée et de son environnement immédiat,
- une étape de traitement d'image, réalisée par un organe de traitement embarqué dans ledit véhicule, dans laquelle :
on détecte (1.2) dans l'image de la scène acquise au moins un objet connu dont les caractéristiques ont été préalablement apprises et stockées localement dans la base de données (BD),
on détecte (1.3) dans l'image de la scène acquise la présence d'au moins une zone de stationnement comprenant au moins une place de stationnement libre et on estime (1.4) les longueurs respectives des places de stationnement libres, à partir d'une corrélation entre les caractéristiques extraites de la base de données relatives aux objets connus détectés dans l'image.

2. Procédé selon la revendication 1, **caractérisé en ce que** les objets connus préalablement appris et stockés comprennent des objets susceptibles d'être présents dans la scène parmi lesquels au moins des panneaux de signalisation, des marquages sur la chaussée, des véhicules, des roues des véhicule.

3. Procédé selon la revendication 1 ou 2, **caractérisé en ce que** l'étape de traitement d'image réalise une étape de détection dans l'image de la scène acquise, d'une portion de chaussée (7) sensiblement plane et sans obstacle située sur un côté ou l'autre de la chaussée (1) et bornée par des objets connus détectés, de manière à déterminer les places de stationnement libres et une étape (1.4) de comparaison des dimensions respectives des objets connus détectés bornant ladite portion de chaussée (7) relativement à ladite portion de chaussée afin d'estimer la longueur relative de ladite portion de chaussée (7).

4. Procédé selon la revendication 3, **caractérisé en ce que** les objets connus bornant ladite portion de chaussée détectée sont des véhicules (2) stationnés de part et d'autre de ladite portion de chaussée détectée (7).

5. Procédé selon la revendication 4, **caractérisé en ce que** la détermination des dimensions respectives des véhicules (2) stationnés de part et d'autre de ladite portion de chaussée comprend la détection (1.41) des points de contact des roues avant et arrière des véhicules avec la chaussée, la détection (1.42) de l'appartenance des roues au même véhicule et la détection (1.43) d'un type de véhicule correspondant à partir d'une classification (CL) préalablement stockée au niveau du véhicule associant pour chaque type de véhicule une distance moyenne entre les roues avant et arrière du véhicule, l'indication du type de véhicule par ladite classification fournissant en outre la longueur correspondante associée au type de véhicule.

6. Procédé selon l'une quelconque des revendications précédentes, **caractérisé en ce qu'**il comprend en outre une étape de comparaison (1.5), par l'organe de traitement embarqué, entre d'une part, au moins une desdites longueurs respectives estimées et, d'autre part, une information représentative d'une longueur dudit véhicule, de façon à fournir une indication au conducteur dudit véhicule que la place de stationnement détectée est suffisamment longue pour permettre le stationnement dudit véhicule.

7. Procédé selon l'une quelconque des revendications précédentes, **caractérisé en ce que** la détection des zones de stationnement comprend l'identification d'un marquage sur la chaussée de type ligne blanche discontinue disposée sur un côté ou l'autre de la chaussée et la détection d'au moins un véhicule stationné au-delà de ladite ligne blanche discontinue.

8. Dispositif de de détection d'une place de stationnement libre comprenant un appareil de prise d'image embarqué sur un véhicule automobile circulant sur une chaussée (1), ledit appareil de prise d'image étant apte à acquérir des images d'une scène de chaussée et de son environnement immédiat, une mémoire embarquée sur ledit véhicule, pour stocker une base de données (BD) d'informations correspondant à un inventaire d'objets connus susceptibles d'être présents dans la scène, ladite base de données (BD) stockant des caractéristiques, parmi lesquelles au moins les dimensions, relatives aux objets connus, et un organe de traitement embarqué sur ledit véhicule apte à effectuer un traitement d'image à partir d'une ou de plusieurs images acquises par l'appareil de prise d'image, ledit traitement d'image étant conçu pour détecter au moins un objet connu dont les caractéristiques ont été préalablement stockées dans la base de données (BD) et, à partir d'une corrélation entre les caractéristiques extraites de la base de données relatives aux objets connus détectés dans l'image, pour détecter la présence d'au moins une zone de stationnement (3) comprenant au moins une place de stationnement libre et pour estimer les longueurs respectives des places de stationnement libres.

9. Dispositif selon la revendication 8, **caractérisé en ce que** l'organe de traitement est apte à effectuer une comparaison entre d'une part, au moins une desdites longueurs respectives estimées et, d'autre part, une information représentative d'une longueur dudit véhicule, de façon à fournir une indication au conducteur dudit véhicule que la place de stationnement détectée est suffisamment longue pour permettre le stationnement dudit véhicule.

10. Véhicule automobile **caractérisé en ce qu'**il comprend un dispositif de détection d'une place de stationnement libre selon l'une quelconque des revendications 8 ou 9.

## Patentansprüche

1. Verfahren zur Detektion eines freien Parkplatzes von einem auf einer Fahrbahn (1) verkehrenden Kraftfahrzeug aus, wobei das Kraftfahrzeug mit einem Gerät zur Aufnahme eines Bildes einer Fahrbahnszene und ihrer unmittelbaren Umgebung ausgestattet ist, wobei das Verfahren **dadurch gekennzeichnet ist, dass** es eine Einlernphase umfasst, während der Merkmale, darunter mindestens die Abmessungen, zu bekannten Objekten, die in der Szene vorhanden sein könnten, lokal in einer Datenbank (BD) auf Ebene des Fahrzeugs gespeichert werden, wobei das Verfahren umfasst:
- einen Schritt des Erfassens, vom Bildaufnahmegerät aus, eines oder mehrerer Szenenbilder der Fahrbahn und ihrer unmittelbaren Umgebung,
- einen Schritt der Bildverarbeitung, der von einer in das Fahrzeug integrierten Verarbeitungseinheit ausgeführt wird, bei dem:
in dem erfassten Szenenbild mindestens ein bekanntes Objekt detektiert (1.2) wird, dessen Merkmale zuvor eingelernt und lokal in der Datenbank (BD) gespeichert wurden,
in dem erfassten Szenenbild das Vorhandensein mindestens einer Parkzone detektiert (1.3) wird, die mindestens einen freien Parkplatz umfasst, und die jeweiligen Längen der freien Parkplätze ausgehend von einer Korrelation zwischen den aus der Datenbank abgerufenen Merkmalen zu den im Bild detektierten bekannten Objekte geschätzt (1.4) werden.

2. Verfahren nach Anspruch 1, **dadurch gekennzeichnet, dass** die bekannten Objekte, die zuvor eingelernt und gespeichert wurden, Objekte umfassen, die in der Szene vorhanden sein könnten, darunter mindestens Verkehrsschilder, Fahrbahnmarkierungen, Fahrzeuge, Räder der Fahrzeuge.

3. Verfahren nach Anspruch 1 oder 2, **dadurch gekennzeichnet, dass** der Bildverarbeitungsschritt einen Schritt des Detektierens, in dem erfassten Szenenbild, eines im Wesentlichen ebenen und hindernisfreien Fahrbahnabschnitts (7), der auf der einen oder anderen Seite der Fahrbahn (1) gelegen ist und durch detektierte bekannte Objekte begrenzt wird, ausführt, so dass die freien Parkplätze bestimmt werden, und einen Schritt (1.4) des Vergleichens der jeweiligen Abmessungen der detektierten bekannten Objekte, die den Fahrbahnabschnitt (7) begrenzen, in Bezug auf den Fahrbahnabschnitt, um die relative Länge des Fahrbahnabschnitts (7) zu schätzen.

4. Verfahren nach Anspruch 3, **dadurch gekennzeichnet, dass** die bekannten Objekte, die den Fahrbahnabschnitt begrenzen, Fahrzeuge (2) sind, die beidseits des detektierten Fahrbahnabschnitts (7) geparkt sind.

5. Verfahren nach Anspruch 4, **dadurch gekennzeichnet, dass** das Bestimmen der jeweiligen Abmessungen der beidseits des Fahrbahnabschnitts geparkten Fahrzeuge (2) das Detektieren (1.41) der Kontaktpunkte der Vorder- und Hinterräder der Fahrzeuge mit der Fahrbahn, das Detektieren (1.42) der Zugehörigkeit der Räder zum selben Fahrzeug und das Detektieren (1.43) eines entsprechenden Fahrzeugtyps ausgehend von einer zuvor auf Ebene des Fahrzeugs gespeicherten Klassifizierung (CL), die für jeden Fahrzeugtyp einen mittleren Abstand zwischen den Vorder- und Hinterrädern des Fahrzeugs zuordnet, umfasst, wobei die Angabe des Fahrzeugtyps durch die Klassifizierung ferner die dem Fahrzeugtyp zugeordnete entsprechende Länge bereitstellt.

6. Verfahren nach einem der vorhergehenden Ansprüche, **dadurch gekennzeichnet, dass** es ferner einen Schritt des Vergleichens (1.5), durch die integrierte Verarbeitungseinheit, zwischen mindestens einer der jeweiligen geschätzten Längen einerseits und einer für eine Länge des Fahrzeugs repräsentativen Information andererseits umfasst, so dass dem Fahrer des Fahrzeugs eine Angabe bereitgestellt wird, dass der detektierte Parkplatz lang genug ist, um das Parken des Fahrzeugs zu ermöglichen.

7. Verfahren nach einem der vorhergehenden Ansprüche, **dadurch gekennzeichnet, dass** das Detektieren der Parkzonen die Identifizierung einer Markierung auf der Fahrbahn von der Art einer unterbrochenen weißen Linie, die auf der einen oder anderen Seite der Fahrbahn angeordnet ist, und das Detektieren mindestens eines jenseits der unterbrochenen weißen Linie geparkten Fahrzeugs umfasst.

8. Vorrichtung zur Detektion eines freien Parkplatzes, umfassend ein Bildaufnahmegerät, das in ein auf einer Fahrbahn (1) verkehrendes Kraftfahrzeug integriert ist, wobei das Bildaufnahmegerät geeignet ist, Bilder einer Fahrbahnszene und ihrer unmittelbaren Umgebung zu erfassen, einen in das Fahrzeug integrierten Speicher, um eine Datenbank (BD) mit Informationen, die einem Bestand an bekannten Objekten entsprechen, die in der Szene vorkommen könnten, zu speichern, wobei die Datenbank (BD) Merkmale, darunter mindestens die Abmessungen, zu den bekannten Objekten speichert, und eine in das Fahrzeug integrierte Verarbeitungseinheit, die geeignet ist, eine Bildverarbeitung ausgehend von einem oder mehreren vom Bildaufnahmegerät erfassten Bildern durchzuführen, wobei die Bildverarbeitung darauf ausgelegt ist, mindestens ein bekanntes Objekt zu detektieren, dessen Merkmale zuvor in der Datenbank (BD) gespeichert wurden, und ausgehend von einer Korrelation zwischen den aus der Datenbank abgerufenen Merkmalen zu den im Bild detektierten bekannten Objekten das Vorhandensein mindestens einer Parkzone (3) zu detektieren, die mindestens einen freien Parkplatz umfasst, und um die jeweiligen Längen der freien Parkplätze zu schätzen.

9. Vorrichtung nach Anspruch 8, **dadurch gekennzeichnet, dass** die Verarbeitungseinheit geeignet ist, einen Vergleich zwischen mindestens einer der jeweiligen geschätzten Längen einerseits und einer für eine Länge des Fahrzeugs repräsentativen Information andererseits durchzuführen, so dass dem Fahrer des Fahrzeugs eine Angabe bereitgestellt wird, dass der detektierte Parkplatz lang genug ist, um das Parken des Fahrzeugs zu ermöglichen.

10. Kraftfahrzeug, **dadurch gekennzeichnet, dass** es eine Vorrichtung zur Detektion eines freien Parkplatzes nach einem der Ansprüche 8 oder 9 umfasst.

## Claims

1. Method for detecting an available parking space from a motor vehicle travelling on a road (1), said motor vehicle being equipped with an apparatus for capturing an image of a road scene and its immediate surroundings, said method being **characterized in that** it comprises a learning phase during which features, including at least the dimensions, in relation to known objects likely to be present in the scene are stored locally in a database (BD) in said vehicle, and said method comprising:
- a step of acquiring, from said image-capturing apparatus, one or more images of the scene of the road and its immediate surroundings,
- an image-processing step, performed by a processing unit on board said vehicle, in which:
at least one known object whose features have been learned beforehand and stored locally in the database (BD) is detected (1.2) in the image of the acquired scene,
the presence of at least one parking area comprising at least one available parking space is detected (1.3) in the image of the acquired scene and the respective lengths of the available parking spaces are estimated (1.4) from a correlation between the features extracted from the database in relation to the known objects detected in the image.

2. Method according to Claim 1, **characterized in that** the known objects that are learned beforehand and stored comprise objects likely to be present in the scene, including at least signposts, road markings, vehicles and vehicle wheels.

3. Method according to Claim 1 or 2, **characterized in that** the image-processing step performs a step of detecting, in the image of the acquired scene, a road portion (7) that is substantially flat and without obstacles situated on either side of the road (1) and is bounded by detected known objects, so as to determine available parking spaces, and a step (1.4) of comparing the respective dimensions of the detected known objects bounding said road portion (7) in relation to said road portion so as to estimate the relative length of said road portion (7).

4. Method according to Claim 3, **characterized in that** the known objects bounding said detected road portion are vehicles (2) parked on either side of said detected road portion (7).

5. Method according to Claim 4, **characterized in that** determining the respective dimensions of the vehicles (2) parked on either side of said road portion comprises detecting (1.41) contact points of the front and rear wheels of the vehicles on the road, detecting (1.42) that the wheels belong to the same vehicle and detecting (1.43) a corresponding type of vehicle from a classification (CL) stored beforehand in the vehicle associating, for each type of vehicle, an average distance between the front and rear wheels of the vehicle, the indication of the type of vehicle by said classification furthermore supplying the corresponding length associated with the type of vehicle.

6. Method according to any one of the preceding claims, **characterized in that** it furthermore comprises a step of comparing (1.5), by the on-board processing unit, between at least one of said estimated respective lengths, on the one hand, and an item of information representative of a length of said vehicle, on the other hand, so as to supply an indication to the driver of said vehicle that the detected parking space is long enough to allow said vehicle to be parked.

7. Method according to any one of the preceding claims, **characterized in that** detecting the parking areas comprises identifying a marking on the road of the type of a discontinuous white line positioned on either side of the road and detecting at least one vehicle parked beyond said discontinuous white line.

8. Device for detecting an available parking space, comprising an image-capturing apparatus on board a motor vehicle travelling on a road (1), said image-capturing apparatus being able to acquire images of a road scene and its immediate surroundings, a memory on board said vehicle, for storing a database (BD) of information corresponding to an inventory of known objects likely to be present in the scene, said database (BD) storing features, including at least the dimensions, in relation to the known objects, and a processing unit on board said vehicle able to perform image processing on the basis of one or more images acquired by the image-capturing apparatus, said image processing being designed to detect at least one known object whose features have been stored beforehand in the database (BD) and, from a correlation between the features extracted from the database in relation to the known objects detected in the image, to detect the presence of at least one parking area (3) comprising at least one available parking space and to estimate the respective lengths of the available parking spaces.

9. Device according to Claim 8, **characterized in that** the processing unit is able to perform a comparison between at least one of said estimated respective lengths, on the one hand, and an item of information representative of a length of said vehicle, on the other hand, so as to supply an indication to the driver of said vehicle that the detected parking space is long enough to allow said vehicle to be parked.

10. Motor vehicle, **characterized in that** it comprises a device for detecting an available parking space according to either one of Claims 8 and 9.
